# EUROPÄISCHE PATENTANMELDUNG

(11) **EP 1 051 940 A2**
(43) Veröffentlichungstag der Anmeldung: **15.11.2000**
(21) Anmeldenummer: 00108825.1
(22) Anmeldetag: 26.04.2000
(51) Int. Cl.: A47J 31/44

(54) **Milchaufschäumgerät**

(30) Priorität: 08.05.1999 DE 19921483
(71) Anmelder: Braun GmbH, 61476 Kronberg (DE)
(72) Erfinder: Zils, Jürgen W., 61476 Kronberg (DE)

(57) **Zusammenfassung**

Die Erfindung betrifft ein Milchaufschäumgerät mit einem einen Grundkörper (1) durchsetzenden und in einer Düse (4) endenden Dampfrohr (2) und einem unterhalb der Düse (4) abstellbaren Gefäß (11). Der Grundkörper (1) ist mit dem Dampfrohr (2) und der Düse (4) innerhalb einer Längsführung (10) eines Gerätegehäuses (3) vertikal verschiebbar. Hierdurch kann die Düse (4) in das Gefäß (11) eingeführt und die darin befindliche Milch aufgeschäumt werden, ohne daß die Hand einer Bedienungsperson das Gefäß (11) halten muß. Verbrennungen werden vermieden und die Bedienungsfreundlichkeit verbessert.

## Beschreibung

Diese Erfindung betrifft ein Milchaufschäumgerät mit einem einen Grundkörper durchsetzenden und in einer Düse mit einer Düsenöffnung endenden Dampfrohr und mit einem unterhalb der Düse vorgesehenen abstellbaren, mit einem Boden versehenen Gefäß.

Derartige Milchaufschäumgeräte sind bei den heutigen Espresso-Cappuchinomaschinen Stand der Technik und dienen zum Aufschäumen von vorher in ein Gefäß eingefüllter Milch.

Bei Kaffee- oder Espressomaschinen mit einer das Kaffeegetränk abgebenden Auslaufvorrichtung sind bereits höhenverstellbare Auslaufvorrichtungen oder Tassenlifte bekannt, mit denen sich ein Höhenabstand zwischen einem Auslaufteil der Auslaufvorrichtung und einem Gefäß zur Anpassung an verschieden hohe Auffangbehälter, wie z.B. Espressotassen, einstellen läßt (vergleiche z.B. DE 298 10 291 U1). Ein derartiger höhenverstellbarer Kaffeeauslauf optimiert nicht die Kaffeebereitung an sich, sondern reduziert nur die Spritzer, die bei zu großer Fallhöhe des in das Sammelgefäß und insbesondere die Espressotasse einlaufenden Kaffees entstehen können. Der Benutzer muß dabei die richtige Höhe selbst ermitteln.

Es ist Aufgabe der Erfindung, ein gattungsgemäßes Milchaufschäumgerät zu schaffen, daß zum einen ein leichtes Einführen der Düse in ein mit Milch gefülltes Gefäß ermöglicht. Zum anderen soll das Gefäß während des Schäumens, d.h. während heißer Dampf die Milch durchströmt, nicht in der Hand gehalten werden. Gleichzeitig soll auch noch in kürzester Zeit ein besonders gutes Aufschäumergebnis entstehen.

Diese Aufgabe wird erfindungsgemäß durch die kennzeichnenden Merkmale des Patentanspruchs 1 gelöst. Erstmals ist es auch gelungen, eine für üblicherweise genutzte Gefäße ausreichende Höhenverstellbarkeit einer Cappuccinodüse zu ermöglichen. Dabei muß das Gefäß während des Schäumens nicht in der Hand gehalten werden und das Dampfrohr kann mit der Düse leicht von oben aufgrund ihrer vertikalen Verschiebbarkeit in das Gefäß eingeführt werden. Dabei ist es vorteilhaft, daß der zwischen dem Grundkörper und der Dampferzeugungseinrichtung liegende Abschnitt der Leitung zumindest teilweise flexibel ausgebildet ist, um eine Höhenverstellung zu ermöglichen.

Gemäß den Merkmalen des Anspruchs 2 kann mit Hilfe des über die Düsenöffnung nach unten vorstehenden Abstandshalter eine Optimierung des Düsenabstands bei beliebigen Gehäuseböden, insbesondere beliebig hohen Böden, erreicht werden.

Die vertikale Verschiebung des Grundkörpers mit dem Dampfrohr läßt sich in der Längsführung stufenlos (Anspruch 4) oder in kleinen Stufen (Anspruch 5) realisieren. Die Führung ist dabei so ausgelegt, daß die Milchaufschäumdüse auf einem geeigneten Weg, der im allgemeinen vertikal ist, in ein abgestelltes Gefäß bis in eine ausreichende Tiefe eingeführt und in einer definierten Endstellung positioniert wird, bei der dann das freie Ende des Abstandshalters am Boden des Gefäßes anschlägt.

Dabei kann die vertikale Bewegung des Grundkörpers nach oben z.B. manuell (Anspruch 6) und die vertikale Abwärtsbewegung in das Milchgefäß hinein automatisch erfolgen (Anspruch 7). Dies ist eine Vorstufe zu einer vollautomatischen Milchaufschäumung, bei der dann sowohl die Aufwärts- als auch die Abwärtsbewegung des Grundkörpers mit der am Dampfrohr befestigten Düse automatisch erfolgen könnte (Anspruch 8).

Durch die Merkmale des Anspruchs 9 wird bei der Verschiebung des Grundkörpers die Öffnung durch das Schild abgedeckt.

Ein leichtes Auswechseln und Befestigen weiterer Ausführungsformen von Düsenkörpern ist durch die Merkmale des Anspruchs 11 möglich.

Es ist selbstverständlich, daß sich das erfindungsgemäße Milchaufschäumgerät zusammen mit allen Kaffee- und Espressomaschinen und auch als selbständiges, d.h. unabhängig von einer Kaffee- oder Espressomaschine betreibbares Gerät realisieren läßt.

Nachstehend wird ein bevorzugtes Ausführungsbeispiel des erfindungsgemäßen Milchaufschäumgeräts anhand der Zeichnung näher erläutert. Es zeigen:
- Fig. 1: eine perspektivische Teildarstellung eines Milchaufschäumgerätes, in dem die wesentlichen Teile dargestellt sind und in dem die Seitenwand des Gefäßes aufgeschnitten ist, um die über seinem Boden in optimalen Abstand stehende Düse sichtbar zu machen,
- Fig. 2: in Schnittansicht die obere Position des in der Längsführung verstellbaren Grundkörpers des erfindungsgemäßen Milchaufschäumgeräts nach der Erfindung und
- Fig. 3: wie Fig. 2, jedoch ist hier die Düse in ein Gefäß eingetaucht und stellt so die unterste Position dar.

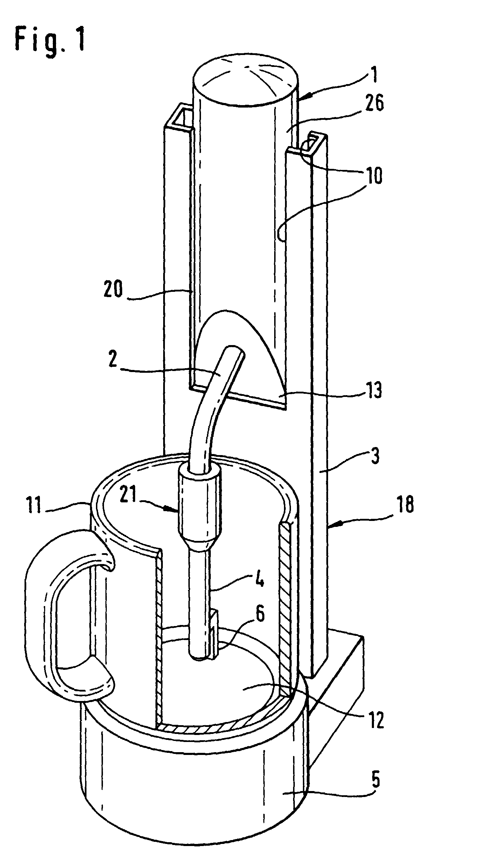

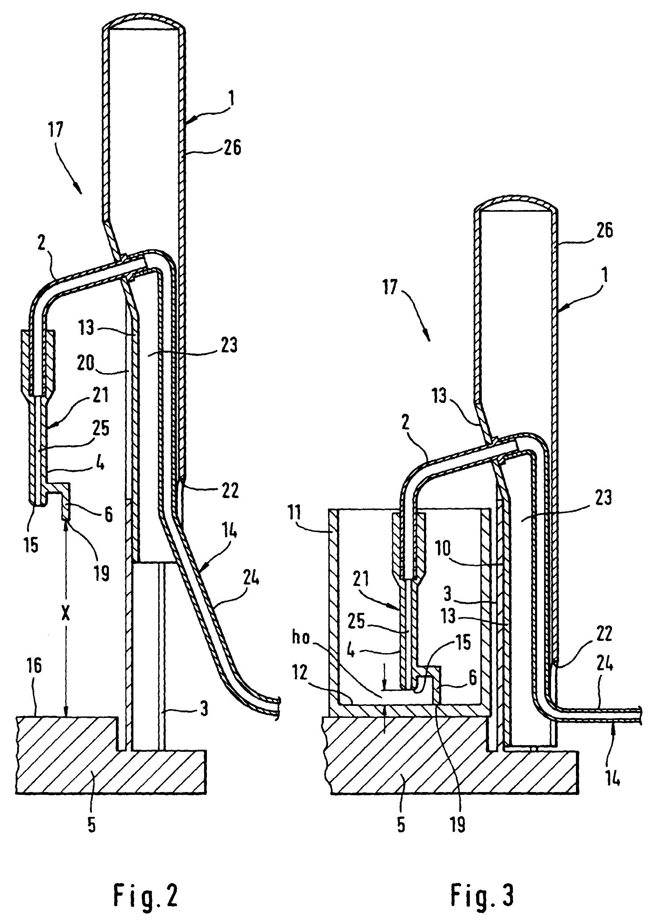

Bei dem in den Figuren 1 bis 3 gezeigten Ausführungsbeispielen eines erfindungsgemäßen Milchaufschäumgeräts 17 ist ein von einem Dampfrohr 2 durchdrungener Grundkörper 1 in einem mit einer Längsführung 10 versehenen säulenförmigen Teil 3 eines Gerätegehäuseteils 18 um eine maximale Strecke vertikal verschiebbar, wie diese durch das Maß X in Fig. 2 angedeutet ist. Die vertikale Verschiebbarkeit des Grundkörpers 1 dient dazu, den mit einer Düse 4 versehenen Endabschnitt des Dampfrohrs 2 leicht von oben in ein Gefäß 11 einzuführen, das in den Figuren 1 und 3 beispielhaft die Form einer zylindrischen Tasse mit flachem Boden 12 hat. Während des Schäumens der darin befindlichen Milch muß das Gefäß 11 nicht in der Hand gehalten werden sondern ruht vorteilhafterweise auf einer Abstellfläche 16 eines sockelförmigen Unterteils 5 des Gerätegehäuses. Das sockelförmige Unterteil 5 kann auch entfallen und das Gefäß 11 wird direkt auf einer Auflage, beispielsweise ein Tisch, abgestellt.

Am vorderen Teil der Düse 4, d.h. im Bereich der Düsenöffnung 15 ragt ein Abstandshalter 6 über die Düsenöffnung 15 in Verlängerung der Düse nach vorne heraus. Mit dem Abstandshalter 6 läßt sich ein für ein optimales Milchschaumergebnis geeigneter optimaler Abstand (ho) zum Boden 12 des Milchgefäßes 11 einstellen, wie dies Fig. 3 zeigt. Dabei schlägt das freie Ende des Abstandhalters 6, also die Anschlagfläche 19 am Boden 12 des Gefäßes 11 an.

Selbstverständlich kann statt des in Fig. 1 gezeigten zylindrischen Bechers 11 mit flachem Boden 12 auch ein leicht konisch oder sonstwie geformter Becher verwendet werden. Dabei kann der Gefäßboden 12 statt flach auch leicht gewölbt oder erhaben sein. Der Grundkörper 1 und das ihn durchsetzende Dampfrohr 2, das im Grundkörper 1 ortsfest gelagert bzw. befestigt ist, kann in der Längsführung 10 entweder stufenlos oder auch in kleinen Stufen verschoben werden. Die Längsführung 10 ist so ausgelegt, daß die Düsenöffnung 15 der Aufschäumdüse 4 auf einem geeigneten Weg in das Gefäß 11 bis in die für das optimale Milchschaumergebnis ausreichende Tiefe (Maß ho) eingeführt und in der definierten Endstellung positioniert werden kann. Der Grundkörper 1 ist dabei so gestaltet, daß er in jeder Position eine gehäuseseitige Öffnung 20 mit einem Schild 13 oder einer Blende verdecken kann, um so den Schutz des Benutzers und des Geräts zu gewährleisten.

Obwohl es in den Figuren 1 bis 3 nicht gezeigt ist, kann die Längsführung 10 auch so gestaltet sein, daß der Grundkörper 1 und das ihn durchsetzende Dampfrohr 2 nicht exakt vertikal sondern in einer leichten Schräge verschoben werden können. Es ist ferner nicht dargestellt, mit welchen Antriebsbewegungsmitteln die vertikale Verstellung des Grundkörpers 1 mit dem ihn durchsetzenden Dampfrohr 2 geschieht. Die beabsichtigte Bewegung kann entweder vollständig manuell oder nur die Hebung manuell und die Absenkung des Grundkörpers 1 automatisch erfolgen. Ferner kann alternativ sowohl die Hebung als auch die Absenkung des Grundkörpers 1 automatisch ausgeführt werden. Dazu notwendige Antriebsmechanismen wie z.B. ein Federmechanismus, ein pneumatischer oder hydraulischer oder auch elektromechanischer Antrieb können von einem dafür einschlägigen Fachmann leicht entworfen und realisiert werden.

Das Maß X in Fig. 2 gibt die Höhendifferenz an, die zwischen der in Fig. 2 dargestellten oberen Position und der in Fig. 3 dargestellten unteren Position entsteht.

Aus den Figuren 2 und 3 ist auch zu erkennen, daß die Düse 4 mit dem Abstandshalter 6 einen vorzugsweise einstückigen Düsenkörper 21 bildet und daß dieser Düsenkörper 21 auswechselbar über den vordersten Teil des Dampfrohrs 2 gesteckt ist. Um die vertikale Verschiebung des Grundkörpers 1 in der Längsführung 10 (Schwalbenschwanzführung oder ähnliche Führungen) zu ermöglichen, ist die Leitung 14 zum Dampfrohr 2 in dem Abschnitt 24, wo es gemäß den Figuren 2 und 3 von rechts über die Öffnung 22 in den Hohlraum 23 des Grundkörpers 1 eintritt, flexibel gestaltet, so daß es sich leicht von der in Fig. 2 gezeigten Position in die in Fig. 3 gezeigte Position und umgekehrt biegen läßt, um den Grundkörper 1 anheben bzw. absenken zu können.

Bei dem erfindungsgemäßen Milchaufschäumgerät 17 läßt sich der Düsenkörper 21 über die Handhabe 26 leicht in ein mit Milch gefülltes Gefäß 11 einführen, da der Grundkörper 1 mit dem ihn durchsetzenden Dampfrohr 2 innerhalb der Längsführung 10 dafür in eine obere Position (vergleiche Fig. 2) gebracht werden kann. Danach kann der Grundkörper 1 mit dem Düsenkörper 21 und der an seinem vorderen Ende befestigten Düse 4 mit dem Abstandshalter 6 mittels der Handhabe 26 einfach in die in Fig. 3 gezeigte untere Position gebracht werden, wobei der Abstandshalter 6 die für ein optimales Milchschaumergebnis geeignete Position dadurch angibt, indem seine Anschlagfläche 19 am Boden 12 des Gefäßes 11 anschlägt.

Während des anschließenden Schäumens, bei dem heißer Dampf, der durch einen in der Zeichnung nicht dargestellten Dampferzeuger erzeugt wird, durch die Bohrung 25 des Düsenkörpers 21 in die die Milch strömt, muß das Gefäß 11 nicht in der Hand gehalten werden, wodurch schmerzhafte Spritzer heißer Milch auf der Haut der haltenden Hand einer Bedienungsperson vermieden sind. Durch die auswechselbare Gestaltung des den Düsenkörper 21 und den Abstandshalter 6 vereinenden Düsenkörpers 21 läßt sich durch einen maßlich veränderten Abstandhalter 6 der Düsenabstand ho verändern, falls dies erforderlich ist.

## Patentansprüche

1. Milchaufschäumgerät mit einem einen Grundkörper (1) durchsetzenden und in einer Düse (4) mit einer Düsenöffnung (15) endenden Dampfrohr (2), das über eine Leitung (14) mit einem Dampferzeuger verbunden ist und mit einem unterhalb der Düse (4) abstellbaren, mit einem Boden (12) versehenen Gefäß (11),
**dadurch gekennzeichnet**,
daß der Grundkörper (1) mit dem Dampfrohr (2) und der Düse (4) innerhalb einer Längsführung (10) eines Gerätegehäuses (3) vertikal verschiebbar ist und daß der zwischen dem Grundkörper (1) und dem Dampferzeuger ausgebildete Abschnitt (24) der Leitung (14) flexibel ausgeführt ist.

2. Milchaufschäumgerät nach Anspruch 1,
**dadurch gekennzeichnet**,
daß die Düse (4) mit einem über die Düsenöffnung (15) nach unten hervorstehenden Abstandshalter (6) mit einer Anschlagfläche versehen ist, so daß ein optimaler Abstand (ho) der Düsenöffnung (15) gegenüber dem Boden (12) des Gefäßes (11) eingestellt werden kann.

3. Milchaufschäumgerät nach Anspruch 1,
**dadurch gekennzeichnet**,
daß das Gerät einen Halter oder Sockel (5) zum Abstellen des Gefäßes (11) aufweist, daß das Maß (X) zwischen der Anschlagfläche (19) des Abstandhalters (6) und der Abstellfläche (16) für das Gefäß (11) so groß bemessen ist, daß das Gefäß (11) leicht untergeschoben werden kann.

4. Milchaufschäumgerät nach Anspruch 1,
**dadurch gekennzeichnet**,
daß die vertikale Verschiebung des Grundkörpers (1) in der Längsführung (10) stufenlos ist.

5. Milchaufschäumgerät nach Anspruch 1,
**dadurch gekennzeichnet**,
daß der Grundkörper (1) in der Längsführung (10) in kleinen Stufen vertikal verschiebbar ist.

6. Milchaufschäumgerät nach Anspruch 1,
**dadurch gekennzeichnet**,
daß Mittel zur manuellen Verschiebung des Grundkörpers (1) in der Längsführung (10) vorgesehen sind.

7. Milchaufschäumgerät nach Anspruch 1,
**dadurch gekennzeichnet**,
daß Mittel zur manuellen Anhebung und automatischen Absenkung des Grundkörpers (1) in der Längsführung (10) bis zum Erreichen des optimalen Abstands (ho) vorgesehen sind.

8. Milchaufschäumgerät nach Anspruch 1,
**dadurch gekennzeichnet**,
daß Mittel zur automatischen Anhebung und automatischen Absenkung des Grundkörpers (1) in der Längsführung (10) vorgesehen sind.

9. Milchaufschäumgerät nach Anspruch 1,
**dadurch gekennzeichnet**,
daß der Grundkörper (1) so gestaltet ist, daß er einen Schild (13) oder eine Blende aufweist oder bildet, um in jeder vertikalen Schiebestellung des Grundkörpers (1) gehäuseseitige Öffnungen zu verdecken.

10. Milchaufschäumgerät nach Anspruch 1,
**dadurch gekennzeichnet**,
daß die Düse (4) mit dem Abstandshalter (6) einen Düsenkörper (21) bildet.

11. Milchaufschäumgerät nach Anspruch 10,
**dadurch gekennzeichnet**,
daß der Düsenkörper (21) am Dampfrohr (2) auswechselbar befestigt ist.
